# EUROPEAN PATENT APPLICATION

(11) **EP 4 435 302 A1**
(43) Date of publication of application: **25.09.2024**
(21) Application number: 22895658.7
(22) Date of filing: 16.11.2022
(51) Int. Cl.: F16K 27/00, F16K 27/04, F16K 31/06, F16K 11/07, F16K 11/22, F16K 11/24

(54) **FLOW-PATH-SWITCHING DEVICE, ELECTROMAGNETIC VALVE USED THEREIN, AND COOLING UNIT**

(30) Priority: 18.11.2021 JP 2021201226; 20.09.2022 JP 2022162793
(71) Applicant: Sanoh Industrial Co., Ltd., Shibuya-ku Tokyo 150-0002 (JP)
(72) Inventor: YAMAZAKI, Nobushi, Koga-shi Ibaraki 306-0041 (JP); MORI, Hiroaki, Koga-shi Ibaraki 306-0041 (JP)
(74) Representative: dompatent von Kreisler Selting Werner - Partnerschaft von Patent- und Rechtsanwälten mbB
(86) International application number: PCT/JP2022/042623
(87) International publication number: WO 2023/090377

(57) **Abstract**

A flow-path switching device includes plural electromagnetic valves configured as three-way valves, and a housing to which the plural electromagnetic valves are provided. The housing is provided with an annular path connecting the plural electromagnetic valves together, plural first flow paths that are connected to the annular path via each of the plural electromagnetic valves and that have one-to-one correspondence with each of the plural electromagnetic valves, and plural second flow paths that are connected to the annular path so as to be sandwiched between the two adjacent electromagnetic valves.

## Description

### Technical Field

The present disclosure relates to a flow-path switching device, an electromagnetic valve used therein, and a cooling unit.

### Background Art

As a flow-path switching device, there is known a device including an electromagnetic valve in which a valve body having a land portion that opens and closes a port is slidably inserted into a sleeve having a plurality of input and output ports (see Japanese Patent Application Laid-Open (JP-A) No. 2012-255508). In addition, examples of literature related to the present disclosure include Japanese Patent Application Laid-Open (JP-A) No. 2020-165479.

### SUMMARY OF INVENTION

### Technical Problem

In the case of the device as described above, the plurality of flow paths are switched by one valve body, and thus when the number of ports connected to the flow paths to be switched increases, the number of land portions to be provided in the valve body increases, and a structure of the electromagnetic valve tends to become complicated.

Accordingly, an object of the present disclosure is to provide a flow-path switching device capable of switching a flow path with a simple structure even when the number of flow paths to be switched increases. Another object is to provide an electromagnetic valve suitable for the flow-path switching device.

### Solution to Problem

A flow-path switching device of the present disclosure includes: a plurality of electromagnetic valves configured as three-way valves, and a housing to which the plurality of electromagnetic valves are provided. The housing includes an annular path connecting the plurality of electromagnetic valves together, a plurality of first flow paths that are connected to the annular path via the plurality of electromagnetic valves, respectively, and that have one-to-one correspondence with the plurality of electromagnetic valves, respectively, and a plurality of second flow paths that are connected to the annular path so as to each be each sandwiched between the two adjacent electromagnetic valves. Each of the plurality of electromagnetic valves includes a hollow portion in which a first port connected to the annular path at a front side in a predetermined direction in which one circuit of the annular path is made and a second port connected to the annular path at a rear side in the predetermined direction are formed, the hollow portion being provided integrally with or separately from the housing, and a valve body that is slidably inserted into the hollow portion so as to be switchable between a first state in which the first port is open and the second port is closed, so as to open the annular path and the first flow path, and a second state in which the first port is closed and the second port is open, so as to open the annular path and the first flow path.

According to this flow-path switching device, the plurality of electromagnetic valves configured as three-way valves, the annular path provided in the housing, the first flow path connected to the annular path via the electromagnetic valve, and the second flow path connected to the annular path at a position sandwiched between the two electromagnetic valves are assembled. Operations of the electromagnetic valves enable switching between the first state in which a fluid flows in the annular path in a predetermined direction and the second state in which the fluid flows in a direction opposite to the predetermined direction. Since the second flow path is connected to the annular path sandwiched between the two electromagnetic valves, the operations of the electromagnetic valves enable switching between a route in which the first flow path and the second flow path are connected in the first state and a route in which the first flow path and the second flow path are connected in the second state. As compared with the case of switching a plurality of flow paths using a single electromagnetic valve, it is possible to reduce complication of a configuration of each electromagnetic valve even when the number of flow paths to be switched increases. Hence, even when the number of flow paths to be switched increases, switching between the flow paths can be realized with a simple structure.

In an aspect of the flow-path switching device of the present disclosure, the hollow portion may have a third port that is connected to the first flow path, that is open in the first state, and that is closed by the valve body in the second state; and a fourth port that is connected to the first flow path, that is closed by the valve body in the first state, and that is open in the second state. According to this aspect, the third and fourth ports that are closed or open by the valve body are connected to the first flow path. The first state and the second state can be realized by the third and fourth ports.

In the aspect of the flow-path switching device of the present disclosure, the hollow portion may have a gap enlarging portion that enables a gap formed between the hollow portion and the valve body to partially enlarge in a circumferential direction of the valve body. According to this aspect, it is possible to avoid that a distal end of the valve body and the housing come into close contact with each other due to a negative pressure therebetween and a smooth operation of the valve body is hindered, so that it is possible to reliably operate the valve body.

In the aspect of the flow-path switching device of the present disclosure, the hollow portion may be provided separately from the housing, the housing may include an attachment portion on which the hollow portion is attached, the attachment portion may have a plurality of projecting portions that project toward an outer circumferential surface of the hollow portion and are provided at intervals in a circumferential direction of the hollow portion, and the hollow portion may be press-fitted to and attached on the attachment portion such that the plurality of projecting portions are deformed. According to this aspect, while resistance when the hollow portion is press-fitted to the attachment portion is reduced, the hollow portion can be reliably fixed to the attachment portion.

In the above-described aspect, the hollow portion may have a baffle portion that extends between two adjacent projecting portions among the plurality of projecting portions and projects toward an inner circumferential surface of the attachment portion. In this case, the hollow portion press-fitted to the attachment portion is inhibited from rotating. As a result of inhibiting the rotation, it is possible to prevent a correspondence relationship between the ports formed in the hollow portion and the flow paths from becoming abnormal due to unexpected rotation.

In the above-described aspect, each of the plurality of electromagnetic valves may include a resin valve housing that accommodates a predetermined configurational element, the housing may be made of a resin material, and the housing may have an annular wall portion that surrounds a perimeter of the attachment portion, projects toward one side in a moving direction of the valve body, and is welded to the valve housing. The hollow portion may be press-fitted into the valve housing via a collar such that an end surface of the hollow portion is not at the same position in an axial direction as a welded portion between the valve housing and the annular wall portion, and the collar may be made of a material having higher heat resistance than the hollow portion. In this case, since the hollow portion is press-fitted into the valve housing via the collar made of the material having high heat resistance, the end surface of the hollow portion is positioned to be separated from the welded portion. Consequently, it is possible to suppress transmission of heat generated at the time of welding to the hollow portion. By suppressing the transmission, it is possible to prevent defects such as thermal deformation and thermal deterioration of the hollow portion.

An electromagnetic valve of the present disclosure is configured as a three-way valve, the electromagnetic valve including: a valve body; a drive unit that drives the valve body; a plunger that operates integrally with the valve body; and a resin valve housing that accommodates the drive unit and the plunger. The drive unit has a hollow coil portion into which the plunger is inserted, a fixed core assembled with the coil portion to face an end portion of the plunger, and a plunger guide that guides the plunger. The valve housing is formed by overmolding with a resin material to surround the drive unit, and the plunger guide is formed by overmolding with a resin material to surround the coil portion.

According to this electromagnetic valve, since the coil portion is formed by overmolding with the resin material to surround the coil portion, the fluid does not come into contact with the coil portion even when the fluid guided to the flow path infiltrates on the drive unit side from the valve element side. Even if the fluid is allowed to infiltrate from the valve element side to the drive unit side, the coil portion is not degraded by the fluid. Since it is not necessary to provide a rubber seal member such as a diaphragm, a bellows, a U-packing, or an O-ring to prevent the fluid from infiltrating on the drive unit side, such a seal member can be eliminated. It is possible to avoid problems caused by providing the seal member, such as wear of the seal member due to sliding with respect to the plunger or an increase in energy required for driving the plunger due to sliding resistance between the seal member and the plunger.

An aspect of the electromagnetic valve of the present disclosure may further include a communication path that is formed between the end portion of the plunger and the fixed core and enables communication between a first space positioned on at a drive unit side and a second space positioned at a valve body side. When a fluid is about to flow in and out of a minute gap formed between the plunger and the plunger guide, the gap functions as an orifice. Consequently, when the drive unit pulls the plunger, a space formed between the end portion of the plunger and the fixed core has a positive pressure, and the positive pressure of the space interferes with the operation of the plunger. When the plunger is about to be moved out, the space has a negative pressure, and the negative pressure of the space interferes with the operation of the plunger. According to this aspect, since the communication path that enables communication between the first space and the second space is provided, it is possible to suppress generation of the positive pressure and the negative pressure that interfere with the operation of the plunger as described above.

In this aspect, since the fluid flows in and out between the first space and the second space via the communication path, the hollow coil portion can be cooled from an inner circumferential side if the fluid is a refrigerant that takes heat from the coil portion. Therefore, it is possible to suppress an increase in temperature of the coil portion at the time of driving the electromagnetic valve. Since power consumption of the electromagnetic valve is power consumption = voltage × current, and the voltage is voltage = electrical resistance of the coil portion × current, power consumption = electrical resistance of the coil portion × current × current is established. In a case in which current control is performed at the electromagnetic valve, the current is constant, and thus the power consumption is obtained from a function with the electrical resistance of the coil portion as a variable. The electrical resistance of the coil portion has temperature dependency, and the higher the temperature of the coil portion, the higher the electrical resistance. According to this aspect, as compared with an aspect in which the coil portion is not cooled from the inner circumferential side, the increase in temperature of the coil portion can be suppressed and the electrical resistance of the coil portion can be maintained low, so that the power consumption at the time of driving the electromagnetic valve can be reduced.

In the above-described aspect, the communication path can be configured in various forms as will be exemplified below.

The communication path may be formed at an inner circumferential surface of the plunger guide and have a slit extending in an axial direction of the plunger guide and retracted in a radial direction. One or a plurality of slits may be provided. In the case in which the communication paths are formed by the plurality of slits, the slits may be arranged at equal intervals in a circumferential direction. The communication path may have a processed portion removed so that a part of the plunger becomes a flat surface. One or a plurality of processing portions may be provided. In the case in which the communication paths are formed by the plurality of processing portions, the processing portions may be arranged at equal intervals in the circumferential direction. The communication path may be formed inside the plunger and may have an internal passage open to both the first space and the second space. The communication path may have a spiral groove formed at an outer circumferential surface of the plunger so as to extend spirally in an axial direction of the plunger. In this case, there is an advantage that a radial load acting on the plunger is strong and wear of the plunger guide does not concentrate on one point.

Regarding a form of the communication path, in a case in which the fluid flows between an outer circumference of the plunger and an inner circumference of the coil portion when the fluid flows in and out to the first space and the second space, a heat exchangeable region between the coil portion and the fluid is larger as compared with a case in which the fluid does not flow between the outer circumference of the plunger and the inner circumference of the coil portion, so that a cooling effect of the coil portion by the fluid is excellent. In the configuration in which the communication path is formed by the spiral groove, a cooling range of the coil portion is expanded in the circumferential direction, and the cooling range is not biased, so that a favorable cooling effect is obtained.

In the aspect of the flow-path switching device of the present disclosure, the first port and the third port may be disposed at one side in a sliding direction of the valve body, and the second port and the fourth port may be disposed at another side in the sliding direction, and the flow-path switching device may further include a seal member that is disposed at an inner circumferential surface of the hollow portion so as to be positioned between both the first port and the third port and both the second port and the fourth port. According to this aspect, the seal member can suppress the flowing in and out of the fluid between the ports.

In this aspect, the flow-path switching device may further include positional displacement suppressing means that is disposed adjacent to the seal member and suppresses positional displacement of the seal member in the sliding direction. The hollow portion may have a small diameter portion having a small inner diameter, a large diameter portion having a large inner diameter, a stepped portion positioned between both the first port and the third port and both the second port and the fourth port and positioned at a boundary between the small diameter portion and the large diameter portion, and a cylindrical portion fitted to the large diameter portion and having an inner diameter adapted to the small diameter portion, and the seal member may be disposed between the stepped portion and the cylindrical portion, so that the stepped portion and the cylindrical portion function as the positional displacement suppressing means. This makes it possible to prevent positional displacement of the seal member in the sliding direction of the valve body. The housing may include a housing main body and a lid that closes one side of the housing main body in the sliding direction, and the cylindrical portion may be provided on the lid. In this case, since the lid has both functions of closing the housing main body and suppressing the positional displacement of the seal member, the number of components can be reduced.

Another aspect of a cooling unit according to the present disclosure includes: the flow path switching device described above; a pump connected to the housing so as to communicate with the second flow path of the flow path switching device; and a tank provided in the flow path switching device to communicate with the first flow path. The tank is provided as the lid of the housing.

According to this cooling unit, since the pump and the tank, which are components of a cooling system, are provided in the flow-path switching device, there is no need to provide a pipe connecting the flow-path switching device and these configurational elements. Therefore, transport efficiency of the fluid is enhanced. Hence, an output of the pump can be reduced, and thus a low-output small pump can be employed. Consequently, the cooling unit can be reduced in size and weight. Further, the tank provided as the lid has the cylindrical portion that suppresses the positional displacement of the seal member. Therefore, the tank has a function of closing the housing main body and a function of suppressing the positional displacement of the seal member, in addition to the original function. Hence, the number of components of the cooling unit can be reduced, and the unit can be made compact.

### Advantageous Effects of Invention

As described above, according to the present disclosure, it is possible to provide a flow-path switching device capable of realizing switching between flow paths with a simple structure even when the number of flow paths to be switched increases, and it is possible to provide an electromagnetic valve suitable for the flow-path switching device.

### BRIEF DESCRIPTION OF DRAWINGS

Fig. 1 is a plan view of a flow-path switching device according to a first embodiment of the present disclosure.
Fig. 2A is a view showing the flow-path switching device in which each electromagnetic valve is in a non-energized state in a direction of IIa in Fig. 1.
Fig. 2B is a view showing the flow-path switching device in which each electromagnetic valve is in an energized state in a direction of IIb in Fig. 1.
Fig. 3 is a schematic cross-sectional view along line III-III in Fig. 2A.
Fig. 4 is a schematic cross-sectional view along line IV-IV in Fig. 2B.
Fig. 5A is a schematic cross-sectional view along line Va-Va in Fig. 3.
Fig. 5B is a schematic cross-sectional view along line Vb-Vb in Fig. 3.
Fig. 6A is a schematic cross-sectional view along line VIa-VIa in Fig. 4.
Fig. 6B is a schematic cross-sectional view along line VIb-VIb in Fig. 4.
Fig. 7 is a partially enlarged view of portion VII in Fig. 4.
Fig. 8A is a partially enlarged view of an electromagnetic valve of Fig. 5A.
Fig. 8B is a schematic cross-sectional view along line VIIIb-VIIIb in Fig. 8A.
Fig. 9A is a view showing a first modification example that realizes a communication path.
Fig. 9B is a schematic cross-sectional view along line IXb-IXb in Fig. 9A.
Fig. 10A is a view showing a second modification example that realizes a communication path.
Fig. 10B is a schematic cross-sectional view along line Xb-Xb in Fig. 10A.
Fig. 11A is a view showing a third modification example that realizes a communication path.
Fig. 11B is a schematic cross-sectional view along line XIb-XIb in Fig. 11A.
Fig. 12 is a perspective view showing the external appearance of a cooling unit in which a flow-path switching device according to a second embodiment of the present disclosure is incorporated.
Fig. 13 is a perspective view showing a state in which the cooling unit is viewed from a back surface side.
Fig. 14 is an exploded perspective view of the cooling unit.
Fig. 15 is a plan view showing a part of the flow-path switching device.
Fig. 16 is a perspective view showing a part of the flow-path switching device.
Fig. 17 is a perspective view showing a reservoir tank incorporated in the cooling unit as viewed from a bottom side.
Fig. 18A is a schematic cross-sectional view of the flow-path switching device schematically showing a cross section including one electromagnetic valve, the view showing a non-energized state.
Fig. 18B is a schematic cross-sectional view of the flow-path switching device schematically showing a cross section including the other electromagnetic valve, the view showing a non-energized state.
Fig. 19A is a schematic cross-sectional view of the flow-path switching device schematically showing a cross section including one electromagnetic valve, the view showing an energized state.
Fig. 19B is a schematic cross-sectional view of the flow-path switching device schematically showing a cross section including the other electromagnetic valve, the view showing an energized state.
Fig. 20 is a view showing flow of a fluid in the non-energized state.
Fig. 21 is a view showing flow of a fluid in the energized state.

### DESCRIPTION OF EMBODIMENTS

### (First Embodiment)

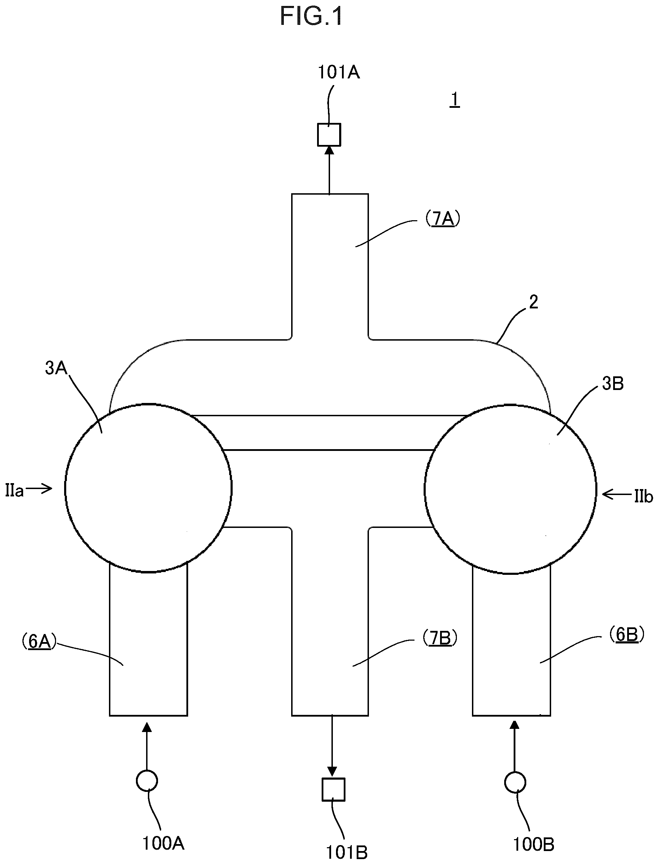

As shown in Fig. 1, two input systems 100A and 100B and two output systems 101A and 101B are connected in a flow-path switching device 1. As an example, the flow-path switching device 1 is incorporated in a cooling system of an electric vehicle in which a long life coolant (LLC) flows. These systems 100A, 100B, 101A and 101B correspond to, for example, a plurality of input systems and output systems provided according to various cooling targets such as a battery, a power control unit and a motor. Since the amount of heat generation and a timing of heat generation vary depending on the cooling targets, a temperature difference may occur in the LLC flowing in each system. Accordingly, in order to appropriately manage a temperature of the LLC flowing in each system, the flow-path switching device 1 switches between correspondence relationships between the input systems 100A and 100B and the output systems 101A and 101B. The LLC corresponds to an example of a fluid. Arrow lines shown in Fig. 1 and the other drawings denote flow of the LLC and a direction thereof unless otherwise specified.

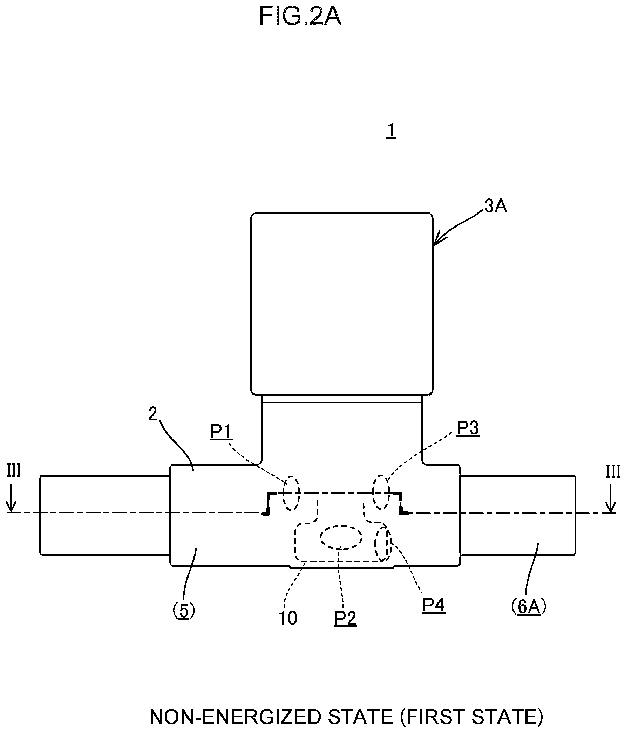

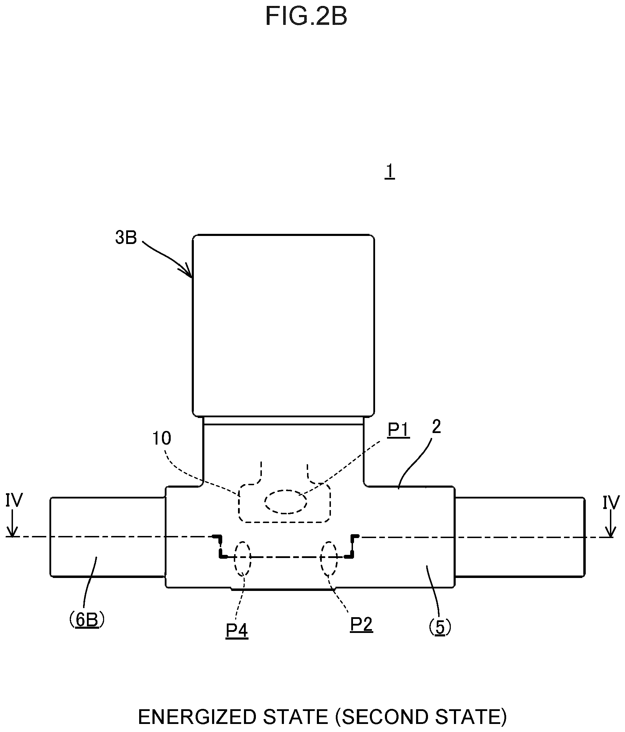

As also shown in Figs. 2A and 2B, the flow-path switching device 1 includes a housing 2 in which a plurality of flow paths in which the LLC flows are formed and two electromagnetic valves 3A and 3B provided in the housing 2. These electromagnetic valves 3A and 3B are configured as three-way valves. Some configurations of the electromagnetic valves 3A and 3B are different from each other, but many configurations are common. Different configurations are assigned with different reference signs in the drawings. The same reference signs are assigned to the common configurations in the drawings, and redundant description thereof will be omitted or simplified.

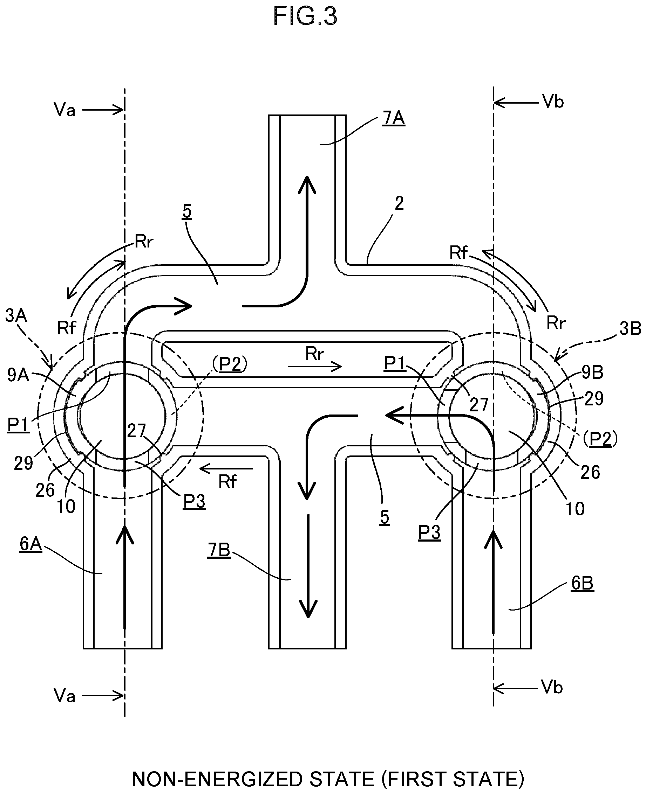

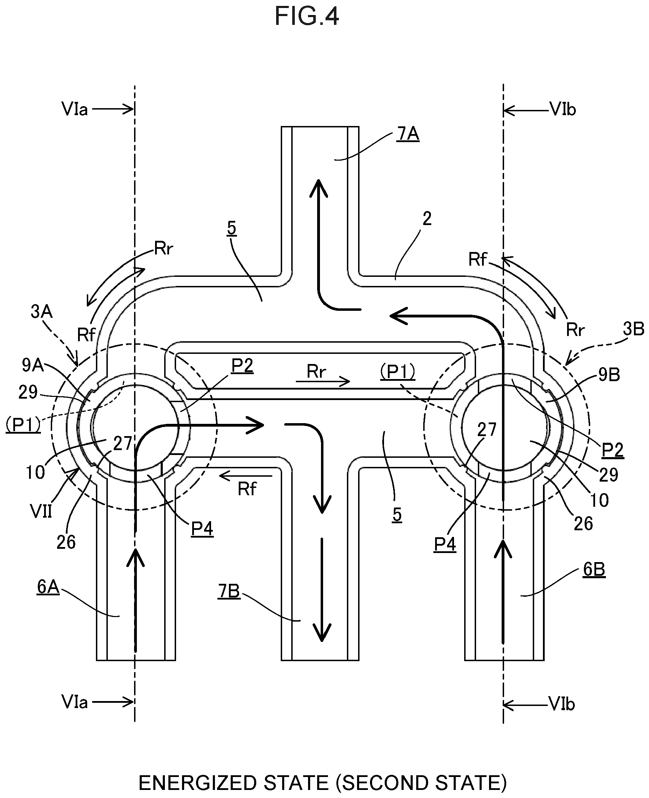

As shown in Figs. 3 and 4, the housing 2 includes an annular path 5 that connects the electromagnetic valves 3A and 3B to each other, input paths 6A and 6B that are connected to the annular path 5 via the electromagnetic valves 3A and 3B, respectively, and have one-to-one correspondence with the electromagnetic valves 3A and 3B, respectively, and output paths 7A and 7B that are connected to the annular path 5 so as to each be sandwiched between the electromagnetic valves 3A and 3B. The input paths 6A and 6B correspond to an example of a first flow path. The output paths 7A and 7B correspond to an example of a second flow path.

The electromagnetic valve 3A includes a sleeve 9A provided separately from the housing 2 and a valve body 10 slidably inserted into the sleeve 9A. The sleeve 9A has four elongated hole-shaped ports P1 to P4 penetrating a circumferential wall and having a long axis in a circumferential direction. The first port P1 is connected to the annular path 5 at a front side in a forward direction Rf in which one rightward circuit of the annular path 5 is made in Fig. 3 or 4. The second port P2 is connected to the annular path 5 at a rear side in the forward direction Rf. The third port P3 and the fourth port P4 are connected to the input path 6A. The electromagnetic valve 3B includes a sleeve 9B in which the four ports P1 to P4 are arranged differently. The four ports P1 to P4 provided in the sleeve 9B are different in arrangement but have the same functions. Hence, the first port P1 is connected to the annular path 5 at the front side in the forward direction Rf. The second port P2 is connected to the annular path 5 at the rear side in the forward direction Rf. The third port P3 and the fourth port P4 are connected to the input path 6B.

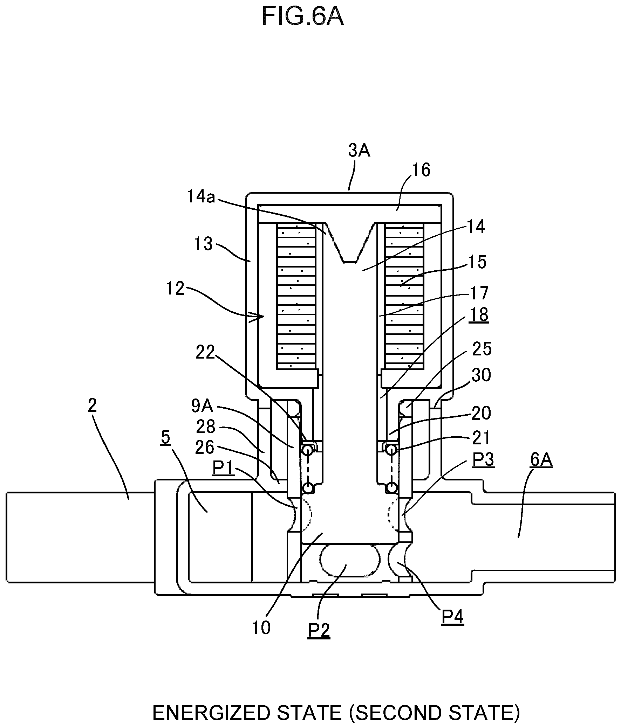

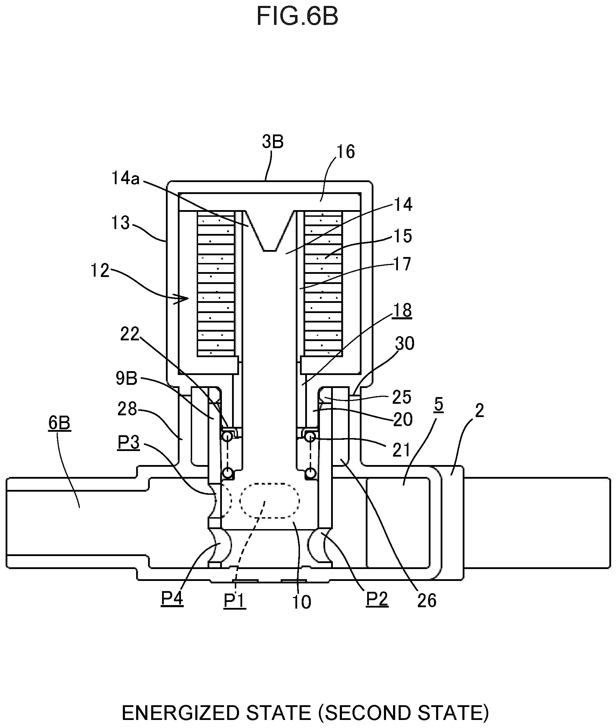

In this embodiment, the third port P3 is open when both the electromagnetic valves 3A and 3B are in a non-energized state, and the third port P3 is closed by the valve body 10 when both the electromagnetic valves 3A and 3B are in an energized state. In this embodiment, the non-energized state shown in Figs. 2A, 3, 5A, and 5B corresponds to a first state, and the energized state shown in Figs. 2B, 4, 6A, and 6B corresponds to a second state.

As shown in Fig. 3, in the non-energized state, the first ports P1 of the electromagnetic valves 3A and 3B are open and the second ports P2 thereof are closed, so that flow in the forward direction Rf of the annular path 5 is allowed and flow in a reverse direction Rr is blocked. Therefore, in the non-energized state, the LLC flowing into the input path 6A flows through the annular path 5 in the forward direction Rf and is guided to the output path 7A. The LLC flowing into the input path 6B flows through the annular path 5 in the forward direction Rf and is guided to the output path 7B. As shown in Fig. 4, in the energized state, contrary to the above, the first ports P1 of the electromagnetic valves 3A and 3B are closed and the second ports P2 thereof are open, so that the flow in the forward direction Rf of the annular path 5 is blocked and the flow in the reverse direction Rr is allowed. Therefore, in the energized state, the LLC flowing into the input path 6A flows through the annular path 5 in the reverse direction Rr and is guided to the output path 7B. The LLC flowing into the input path 6B flows through the annular path 5 in the reverse direction Rr and is guided to the output path 7A. Hence, by switching from the non-energized state to the energized state, it is possible to switch from a route in which the input system 100A and the output system 101A are connected and the input system 100B and the output system 101B are connected shown in Fig. 1 to a route in which the input system 100A and the output system 101B are connected and the input system 100B and the output system 101A are connected.

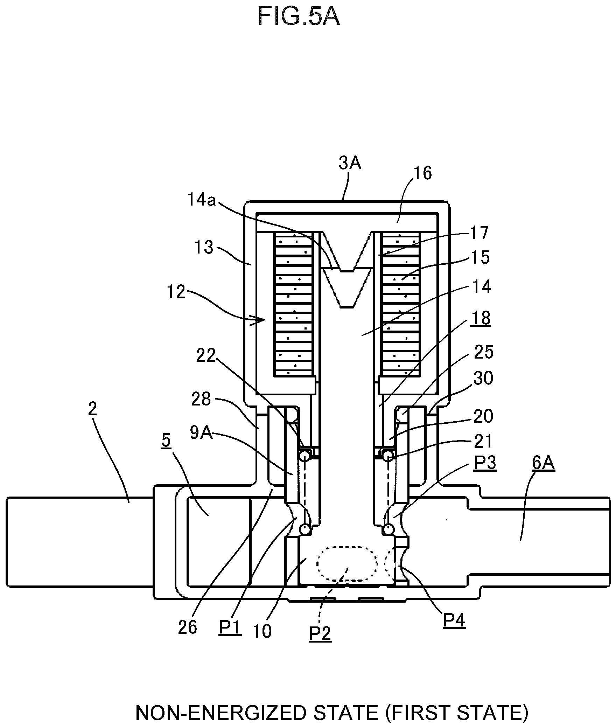

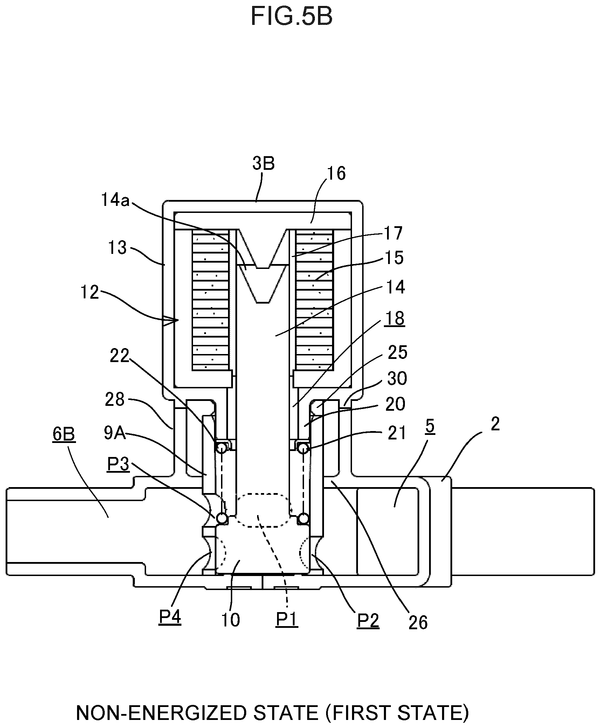

As shown in Figs. 5A and 5B, each of the electromagnetic valves 3A and 3B includes a drive unit 12 that drives the valve body 10, a valve housing 13 that accommodates the drive unit 12, and a plunger 14 integrated with the valve body 10. The drive unit 12 includes a hollow coil portion 15 into which the plunger 14 is inserted, a fixed core 16 assembled with the coil portion 15, and a plunger guide 17 that guides the plunger 14.

The coil portion 15 is formed by performing molding in a state where a winding is wound around a bobbin (not shown). Although not shown, the drive unit 12 is manufactured as follows. In a state in which the fixed core 16 and the coil portion 15 are assembled and a core cylinder is inserted into the coil portion 15, the coil portion 15 and the fixed core 16 are disposed in a mold forming an outer shape of the drive unit 12, and overmolding is performed with a resin material to surround the coil portion 15 and the fixed core 16. Another mold that forms an outer shape of the valve housing 13 is prepared, the drive unit 12 in a state where the core cylinder is inserted is disposed in this mold, and overmolding is performed with a resin material to surround the drive unit 12. The core cylinder inserted into the coil portion 15 has a shape corresponding to the plunger 14 and has a shape having a large diameter portion larger than an outer diameter of the plunger 14, and the large diameter portion presses the drive unit 12 so that the drive unit 12 is not displaced by an injection pressure during molding of the valve housing 13. When a molded product is released from the mold and the core cylinder is removed, the plunger guide 17 is formed of the resin material that has flowed around an inner circumferential side of the coil portion 15. A space 18 having a shape corresponding to the large diameter portion of the core cylinder is formed between the valve housing 13 and the plunger 14. As described above, since the overmolding is performed with the resin material to surround the coil portion 15, the LLC does not come into contact with the coil portion 15 even if the LLC infiltrates from the valve body 10 side to the drive unit 12 side.

Even if the LLC is allowed to infiltrate from the valve body 10 side to the drive unit 12 side, the coil portion 15 is not degraded by the LLC. Since there is no need to provide a rubber seal member such as a diaphragm, a bellows, a U-packing, or an O-ring to prevent the LLC from infiltrating to the drive unit 12 side, such a seal member can be eliminated. It is possible to avoid problems caused by providing the seal member, such as wear of the seal member due to sliding with the plunger 14 or an increase in energy required for driving the plunger due to sliding resistance between the seal member and the plunger.

The valve housing 13 includes a cylindrical portion 20 extending in an axial direction of the plunger 14 to be separated from the drive unit 12. A spring 21 is provided in a compressed state between an end surface of the cylindrical portion 20 and the valve body 10, and a spring seat 22 is mounted between the end surface of the cylindrical portion 20 and the spring 21. In the non-energized state, the drive unit 12 biases the valve body 10 in a direction in which the valve body is separated from the drive unit 12 by a spring force of the spring 21. In the energized state, the valve body 10 is driven in a direction in which the valve body approaches the drive unit 12 against the spring force of the spring 21.

A collar 25 is mounted on an outer circumference of the cylindrical portion 20, and the sleeve 9A of the electromagnetic valve 3A is press-fitted to the outer circumference of the cylindrical portion 20 with the collar 25 interposed therebetween. The collar 25 may be made of resin or metal as long the collar is made of a material having higher heat resistance than the sleeves 9A and 9B.

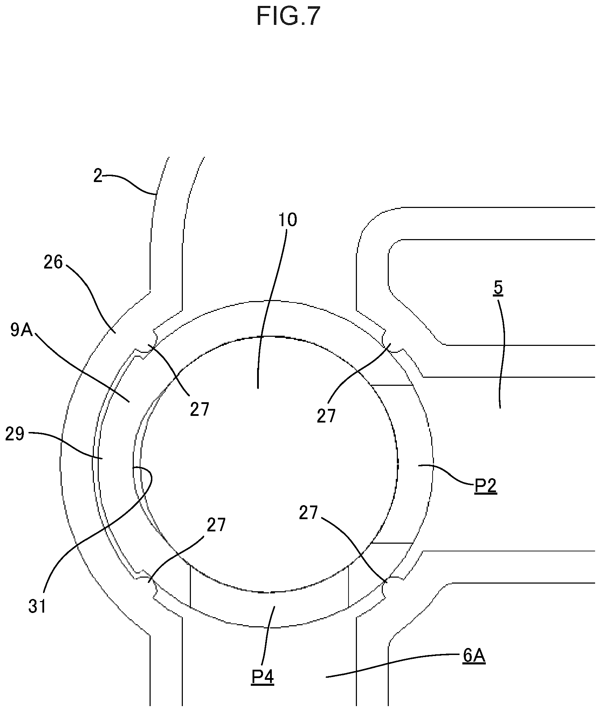

As shown in Figs. 3 and 4, the housing 2 includes attachment portions 26 to which the electromagnetic valves 3A and 3B are attached, respectively. As shown in Fig. 7, each of the attachment portions 26 includes four projecting portions 27 that project toward each of the sleeves 9Aand 9B and are provided at intervals in each circumferential direction of the sleeves 9A and 9B. The four projecting portions 27 are arranged at equal intervals of 90 degrees in the circumferential direction. Each of the projecting portions 27 extends in a moving direction of the valve body 10. The number of the projecting portions 27 may be any number as long as the number is two or more. Each of the sleeves 9A and 9B is press-fitted and attached such that the four projecting portions 27 are deformed. The arrangement of the projecting portions 27 enable resistance when each of the sleeves 9A and 9B is press-fitted into the attachment portion 26 to be reduced and enable each of the sleeves 9A and 9B to be reliably fixed to each of the attachment portions 26. The sleeves 9A and 9B may be press-fitted into the respective attachment portions 26 after the sleeves 9A and 9B are press-fitted into the respective cylindrical portions 20 of the respective valve housings 13, or only the sleeves 9Aand 9B may be press-fitted into the respective attachment portions 26 before the sleeves 9A and 9B are press-fitted into the respective cylindrical portions 20 of the respective valve housings 13, and then the cylindrical portions 20 and the sleeves 9A and 9B may be press-fitted.

As shown in Fig. 7, on an outer circumference of each of the sleeves 9A and 9B, a baffle portion 29 that extends between the two adjacent projecting portions 27 and projects toward an inner circumferential surface of each of the attachment portion 26 is provided. Since the baffle portion 29 meshes with the projecting portions 27, the sleeves 9A and 9B press-fitted into the respective attachment portions 26 are inhibited from rotating. As a result of inhibiting the rotation, it is possible to prevent a correspondence relationship between the ports P1 to P4 formed in each of the sleeves 9A and 9B and the flow paths from becoming abnormal due to unexpected rotation.

As shown in Figs. 5A, 5B and the like, the housing 2 includes an annular wall portion 28 that surrounds a perimeter of the attachment portion 26, projects to one side in the moving direction of the valve body 10, and is welded to the valve housing 13. Since the sleeves 9A and 9B are press-fitted into the respective cylindrical portions 20 via the respective collars 25, the end surfaces of the sleeves 9A and 9B are not at the same position as respective welded portions 30 in an axial direction of the respective plunger 14. The collars 25 are made of a material having higher heat resistance than the sleeves 9A and 9B. Hence, the welded portions 30 and the end surfaces of the sleeves 9A and 9B are positioned to be separated from the welded portion 30. Transmission of heat generated at the time of welding to the sleeves 9A and 9B can be suppressed. By suppressing the transmission, it is possible to prevent defects such as thermal deformation and thermal deterioration of the hollow portion.

As also shown in Fig. 7, each of the sleeves 9A and 9B has a gap enlarging portion 31 that enables a gap formed between each of the sleeves 9A and 9B and the valve body 10 to partially enlarge in a circumferential direction of the valve body 10. The gap enlarging portion 31 is configured by partially distorting each wall of the sleeves 9A and 9B. The gap enlarging portion 31 of each of the sleeves 9A and 9B enables to avoid that a distal end of the valve body 10 and the housing 2 come into close contact with each other due to a negative pressure therebetween and a smooth operation of the valve body 10 is hindered, so that it is possible to reliably operate the valve body 10.

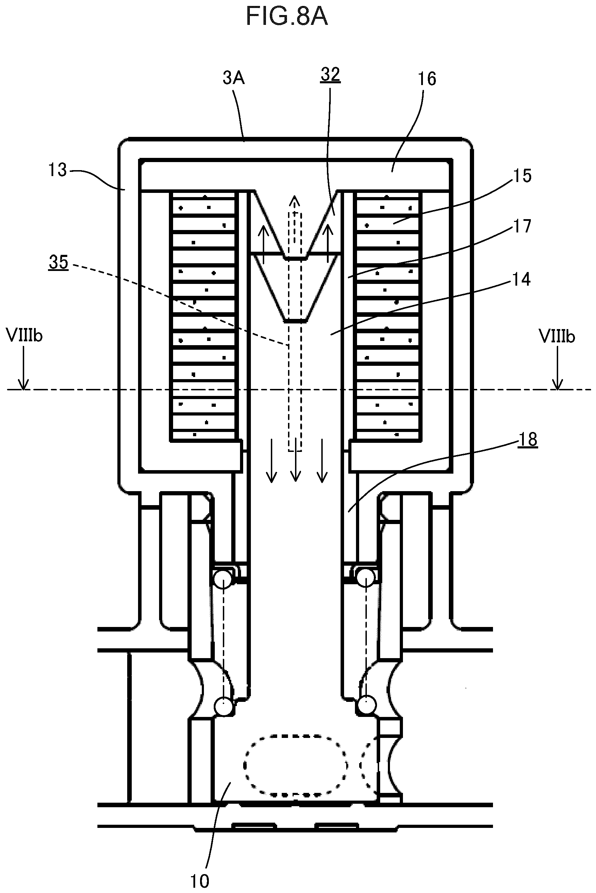

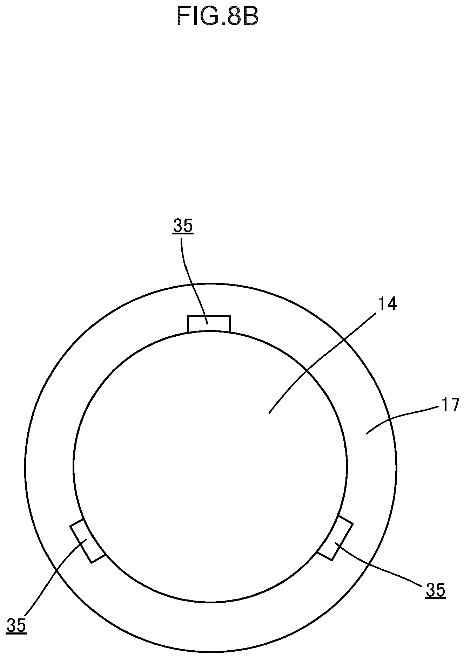

As shown in Figs. 8A and 8B, each of the electromagnetic valves 3A and 3B includes three slits 35 as an example of a communication path through which a space 32 that is formed between an end portion 14a of the plunger 14 and the fixed core 16 and is positioned at the drive unit 12 side communicates with a space 18 positioned at the valve body 10 side. The slits 35 are formed in an inner circumferential surface of the plunger guide 17, extends in an axial direction of the plunger guide 17, and recedes in a radial direction thereof. Consequently, since the space 32 on the drive unit 12 side communicates with the space 18 on the valve body 10 side, the following effects can be obtained.

In general, when a fluid is about to flow in and out of a minute gap formed between the plunger and the plunger guide, the gap functions as an orifice. Consequently, when the drive unit pulls the plunger, a space formed between the end portion of the plunger and the fixed core has a positive pressure, and the positive pressure of the space interferes with the operation of the plunger. When the plunger is about to be moved out, the space has a negative pressure, and the negative pressure of the space interferes with the operation of the plunger.

The slits 35 in Figs. 8A and 8B can suppress the generation of the positive pressure and the negative pressure as described above that interfere with the operation of the plunger 14. The number of slits 35 is arbitrary. For example, the number of slits may be selected within a range of from one to four. In a case in which the plurality of slits 35 are provided, the slits may be provided at equal intervals or at unequal intervals in the circumferential direction.

Since the LLC flows in and out between the space 32 on the drive unit 12 side and the space 18 on the valve body 10 side, the coil portion 15 can be cooled from the inner circumferential side by the LLC, and thus an increase in temperature of the coil portion 15 can be suppressed at the time of driving each of the electromagnetic valves 3A and 3B. Since power consumption of each of the electromagnetic valves 3A and 3B is power consumption = voltage × current, and a voltage is voltage = electrical resistance of the coil portion 15 × current, power consumption = electrical resistance of the coil portion 15 × current × current is established. In a case in which current control is performed at each of the electromagnetic valves 3A and 3B, the current is constant, and thus the power consumption is obtained from a function with the electrical resistance of the coil portion 15 as a variable. The electrical resistance of the coil portion 15 has temperature dependency, and the higher the temperature of the coil portion 15, the higher the electrical resistance. Hence, as compared with a case in which the coil portion 15 is not cooled from the inner circumferential side, the increase in temperature of the coil portion 15 can be suppressed and the electrical resistance of the coil portion 15 can be maintained low, so that the power consumption at the time of driving each of the electromagnetic valves 3A and 3B can be reduced.

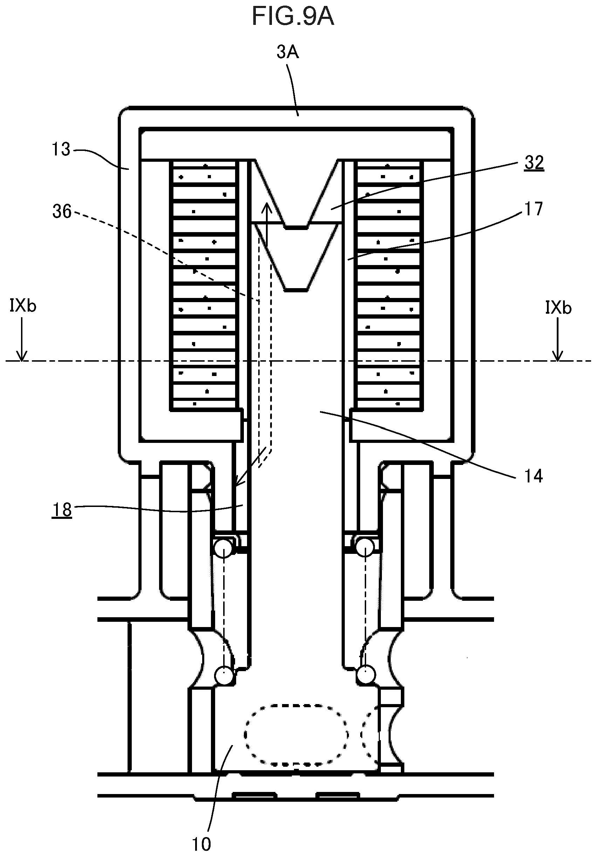

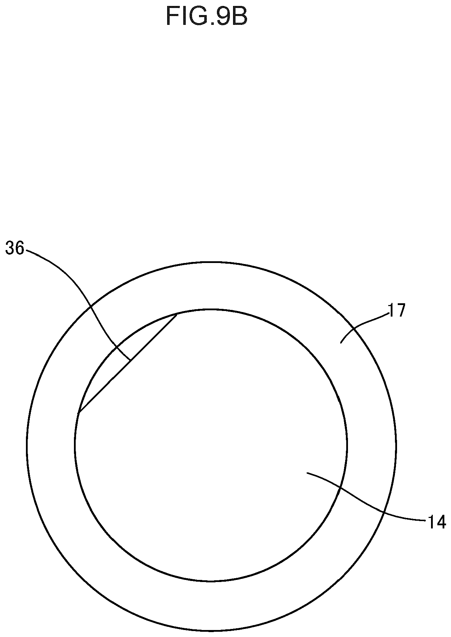

Figs. 9A and 9B show a first modification example for realizing the communication path. In the first modification example, a communication path includes a processed portion 36 removed so that a part of the plunger 14 becomes a flat surface. Since the space 32 on the drive unit 12 side and the space 18 on the valve body 10 side communicate with each other through the processed portion 36, effects similar to those in the embodiments in Figs. 8A and 8B can be obtained. The number of the processed portions 36 is arbitrary and may be one or more. For example, the number of the processed portions may be selected within a range of from one to four.

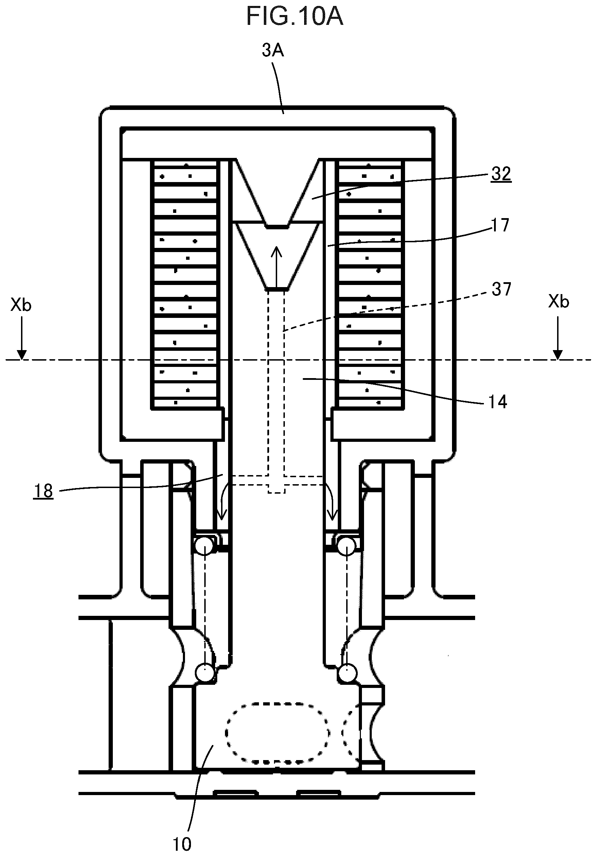

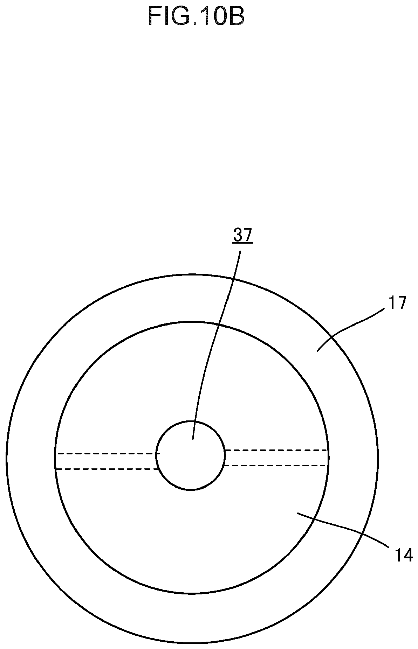

Figs. 10A and 10B show a second modification example for realizing the communication path. In the second modification example, a communication path is formed by an internal passage 37 that is formed inside the plunger 14 and is open to each of the space 32 and the space 18. The internal passage 37 has a main passage 37a that extends in the axial direction of the plunger 14 and is open to the space 32, and two branch passages 37b that are branches from the main passage 37a and are open to the space 18. Since the space 32 on the drive unit 12 side and the space 18 on the valve body 10 side communicate with each other through the internal passage 37, effects similar to those in the embodiments in Figs. 8A and 8B can be obtained. The number of the branch passages 37b is arbitrary and may be one or more. In the case in which a plurality of branch passages 37b are provided, opening positions of the branch passages 37b can be set at equal intervals in the circumferential direction.

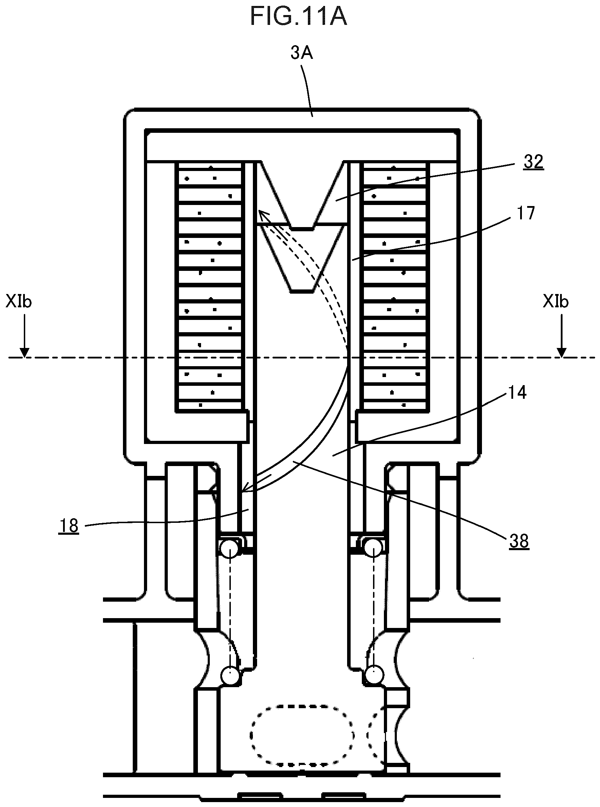

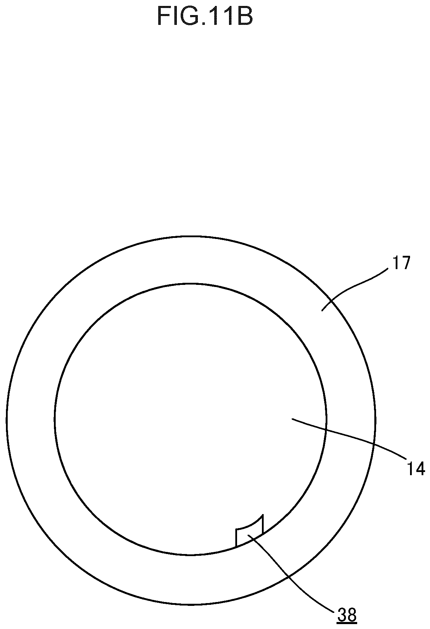

Figs. 11A and 11B show a third modification example for realizing the communication path. In the third modification example, the communication path may have a spiral groove 38 formed at an outer circumferential surface of the plunger 14 to extend spirally in the axial direction of the plunger 14. Since the space 32 on the drive unit 12 side and the space 18 on the valve body 10 side communicate with each other through the spiral groove 38, effects similar to those in the embodiment of Figs. 8A and 8B can be obtained. The third modification example has a specific advantage that a radial load acting on the plunger 14 is strong and wear of the plunger guide 17 does not concentrate on one point.

In the embodiment of Figs. 8A and 8B and the first to third modification examples, the space 32 corresponds to an example of a first space, and the space 18 corresponds to an example of a second space. In each of the above embodiments, the sleeves 9A and 9B are provided separately from the housing 2, but elements that function in the same manner as the sleeves 9A and 9B in an integrated manner may be formed integrally with the housing 2 to form the hollow portion.

In the structures of the first embodiment, the first modification example and the third modification example, when the LLC flows in and out between the space 32 and the space 18, the LLC flows between the outer circumference of the plunger 14 and the inner circumference of the coil portion 15. Therefore, a heat exchangeable region between the coil portion 15 and the LLC is larger as compared with the case in which the LLC does not flow therebetween, so that thus a cooling effect of the coil portion 15 by the LLC is excellent. In the third modification example, a cooling range of the coil portion 15 is expanded in the circumferential direction, and the cooling range is not biased, so that a favorable cooling effect is obtained.

### (Second Embodiment)

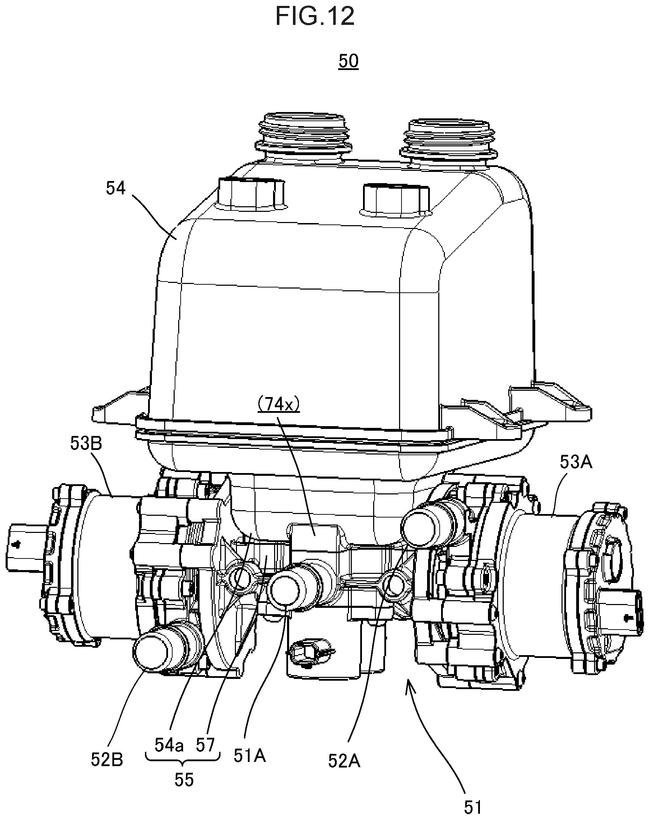

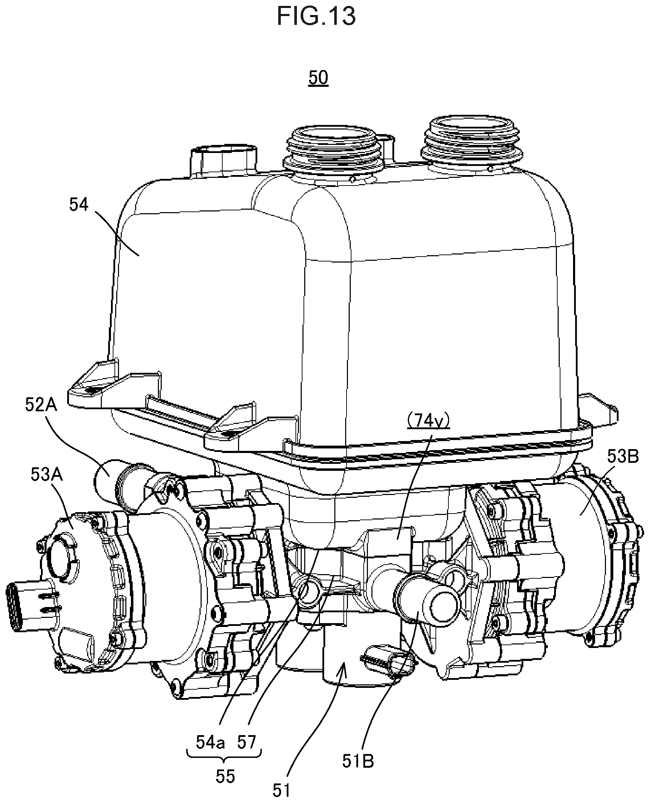

As shown in Figs. 12 to 14, a flow-path switching device 51 according to a second embodiment is incorporated in a cooling unit 50. The cooling unit 50 may be applied to a cooling system of an automobile as an example. The cooling unit 50 includes two input portions 51A and 51B and two output portions 52A and 52B to which a pipe such as a tube is connected and switches between correspondence relationships between each of the input portions 51A and 51B and each of the output portions 52A and 52B by operating the flow-path switching device 51. Consequently, the cooling system of the automobile can be switched as an example. The cooling unit 50 further includes two water pumps 53A and 53B that have one-to-one correspondence with the two output portions 52A and 52B, and a reservoir tank 54 that is connected to the flow-path switching device 51 and stores the LLC which is an example of a fluid flowing in the cooling unit 50. The reservoir tank 54 is made of resin, for example. The reservoir tank 54 corresponds to an example of a tank.

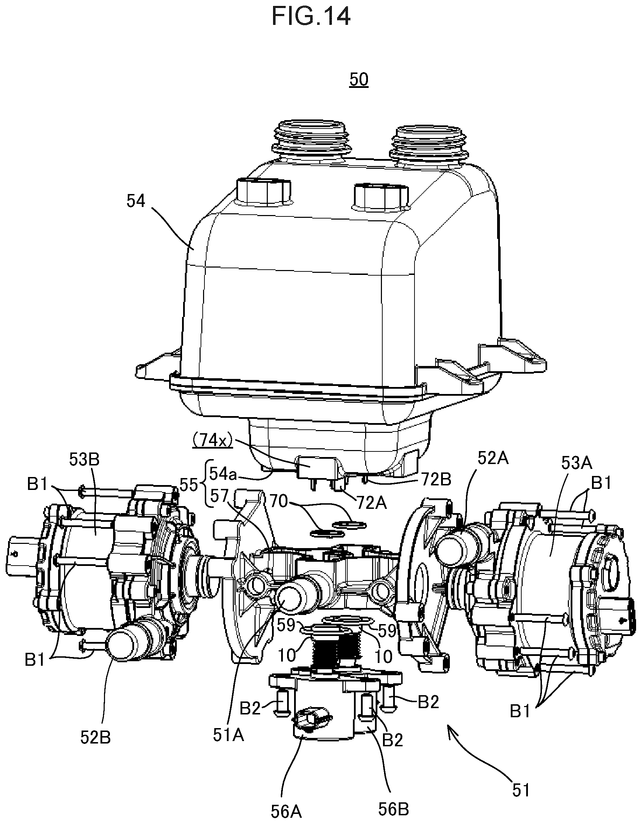

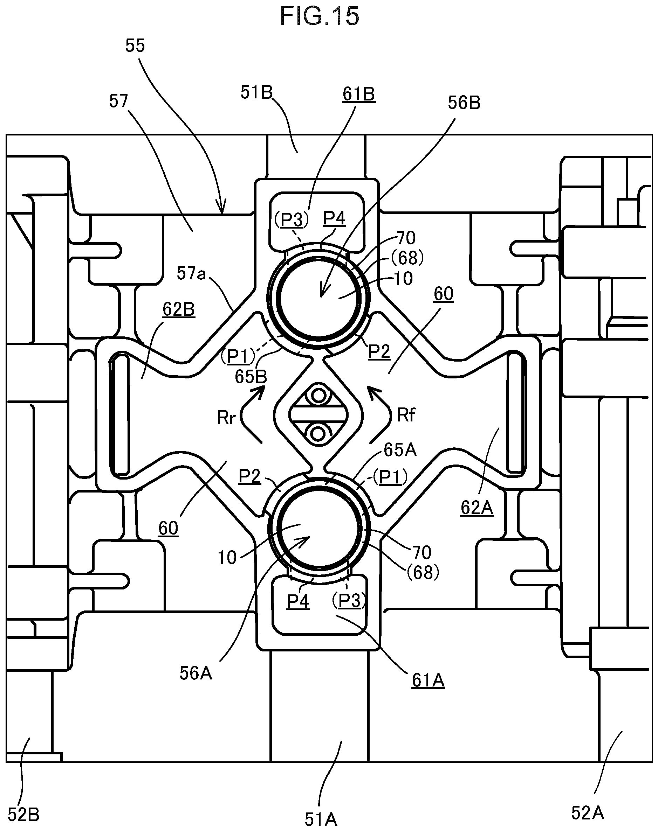

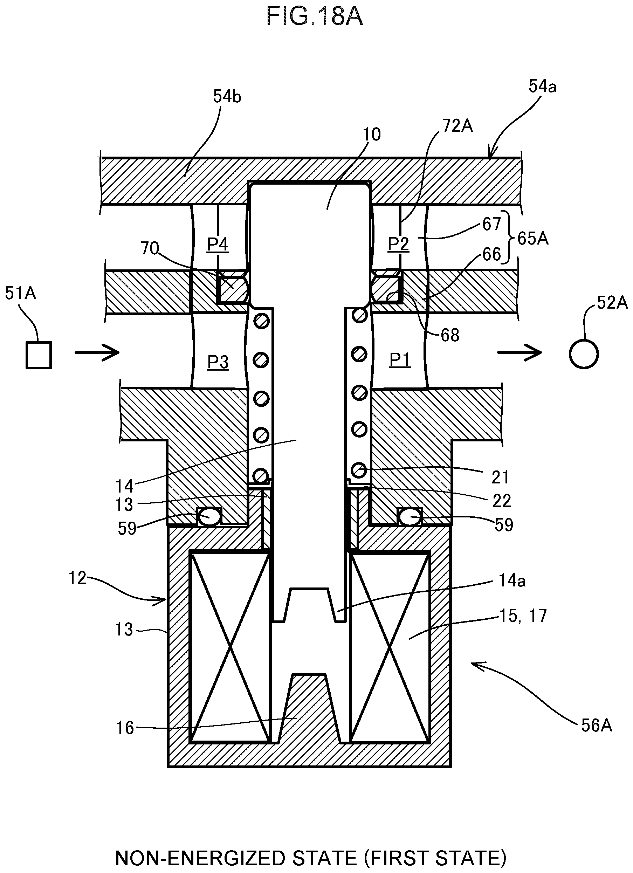

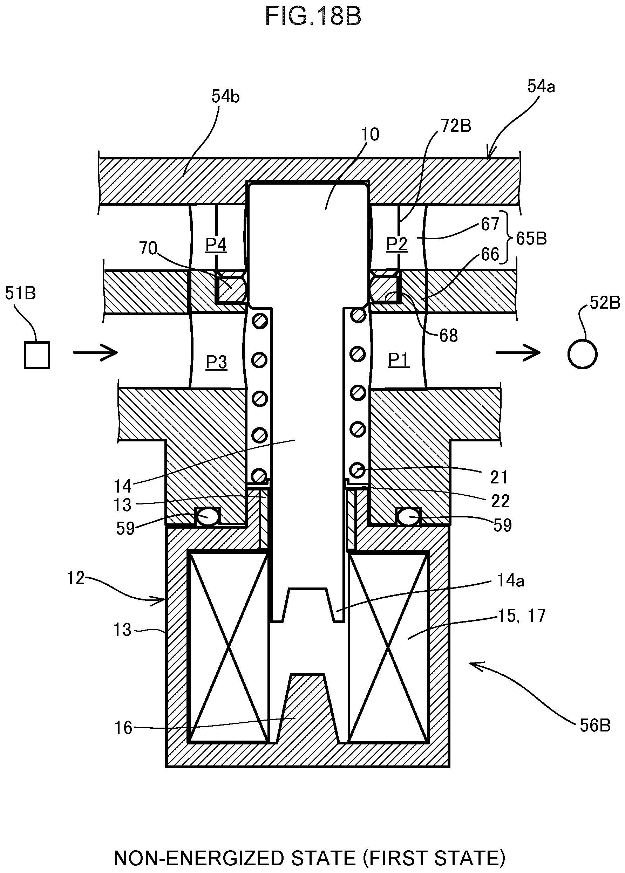

As also shown in Figs. 14 and 15, the flow-path switching device 51 includes a housing 55 which has a plurality of flow paths in which the LLC flows and to which the water pumps 53A and 53B are connected in a state of communicating with the flow paths, and two electromagnetic valves 56A and 56B provided in the housing 55. The water pumps 53A and 53B are attached to the housing 55 by fastening means such as a plurality of bolts B1. The electromagnetic valves 56A and 56B have substantially the same basic structure except for the sleeves 9A and 9B (see Fig. 5B and the like) of the electromagnetic valves 3A and 3B applied to the first embodiment, and thus, in the following description, the same reference signs are assigned to the configurations having the same functions in the drawings and redundant description is omitted or simplified in the following description (see also Figs. 18A and 18B). However, as is apparent from Fig. 14, the electromagnetic valves 56A and 56B are different from the electromagnetic valves 3A and 3B of the first embodiment in that directions in which the electromagnetic valves are attached to the housing 55 are vertically opposite to each other. That is, each of the electromagnetic valves 56A and 56B is attached to the housing 55 in an orientation in which the valve body 10 is positioned on an upper side and the drive unit 12 is positioned on a lower side with respect to the housing 55. In order to prevent leakage of the LLC from an attachment surface between each of the electromagnetic valves 56A and 56B and the housing 55, the electromagnetic valves 56A and 56B is attached to the housing 55 by fastening means such as a pair of bolts B2 with respective O-rings 59 interposed therebetween.

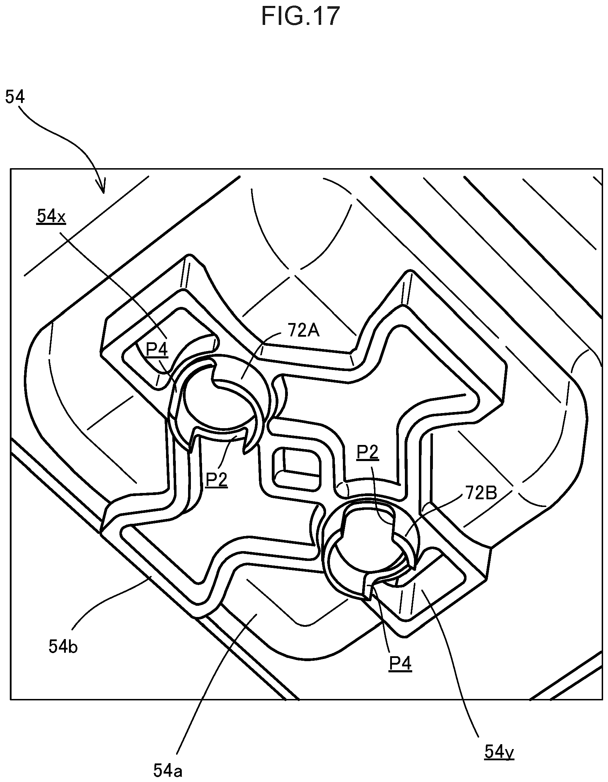

As shown in Fig 15, the housing 55 includes an upwardly open housing main body 57 on which the electromagnetic valves 56A and 56B are mounted and which traverses a plurality of flow paths on an opposite side of the sides on which the electromagnetic valves are mounted. The housing main body 57 is made of resin, for example. An upper portion of the housing main body 57 is closed by a bottom portion 54a of the reservoir tank 54 (see Figs. 14 and 17). As shown in Fig. 17, the bottom portion 54a has a circumferential wall 54b that matches a shape of an outer circumferential passage wall 57a shown in Fig. 15 provided in the housing main body 57. The reservoir tank 54 is liquid-tightly joined to the housing main body 57 by welding as an example in a state where end surfaces of the outer circumferential passage wall 57a and the circumferential wall 54b abut on each other. The bottom portion 54a of the reservoir tank 54 corresponds to an example of a lid. In a case in which the housing main body 57 is made of metal as another example, for example, the bottom portion 54a of the reservoir tank 54 may be liquid-tightly connected to the housing main body 57 by a fastening element such as a bolt, with a gasket having the same shape as the end surface of the outer circumferential passage wall 57a interposed between the outer circumferential passage wall 57a and the circumferential wall 54b.

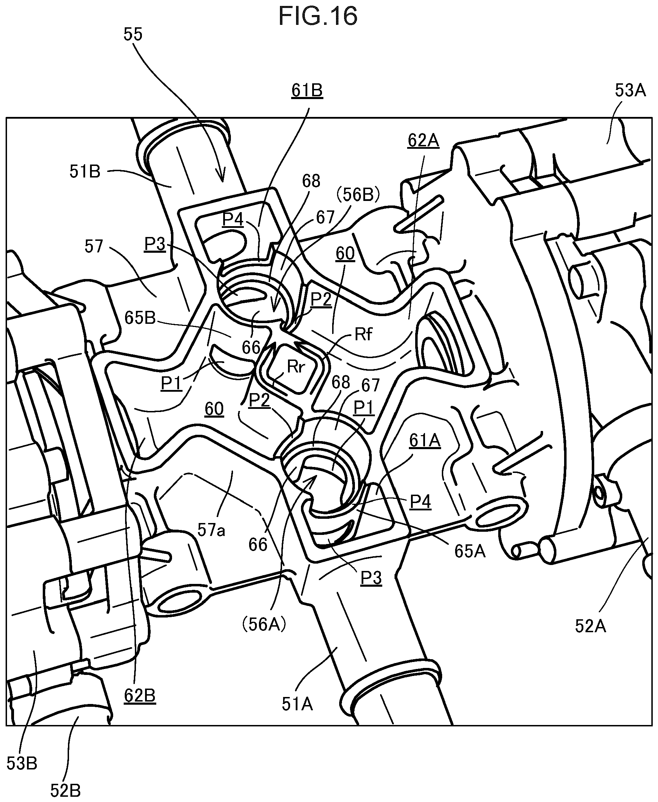

As shown in Figs. 15 and 16, the housing main body 57 has an annular path 60 formed in a substantially rectangular shape by connecting the electromagnetic valves 56A and 56B to each other, input paths 61A and 61B which are connected to the annular path 60 via the electromagnetic valves 56A and 56B, respectively, and have one-to-one correspondence with the electromagnetic valves 56A and 56B, and output paths 62A and 62B connected to the annular path 60 at positions sandwiched between the electromagnetic valves 56A and 56B. The input path 61A communicates with the input portion 51A, the input path 61B communicates with the input portion 51B, the output path 62A communicates with the output portion 52A, and the output path 62B communicates with the output portion 52B. The input paths 61A and 61B correspond to an example of the first flow path. The output paths 62A and 62B correspond to an example of the second flow path. As shown in Fig. 17, through-holes 54x and 54y are formed in the bottom portion 54a of the reservoir tank 54 to communicate with the input paths 61A and 61B, respectively. There is no need to provide a pipe such as a tube for connecting the reservoir tank 54 and the input paths 61A and 61B.

As shown in Figs. 15 and 16, the electromagnetic valves 56A and 56B have respective cylindrical walls 65A and 65B, which are elements functioning similarly to the sleeves 9A and 9B according to the first embodiment, and cylindrical portions 72A and 72B (see Fig. 17) to be described below. The cylindrical walls 65A and 65B are provided integrally with the housing main body 57. As shown in Fig. 16, each of the cylindrical walls 65Aand 65B includes a small diameter portion 66 having a small inner diameter, a large diameter portion 67 having a large inner diameter, and a stepped portion 68 positioned at a boundary between the small diameter portion 66 and the large diameter portion 67. As shown in Fig. 15, the stepped portion 68 has an annular seal member 70. As shown in Fig. 17, the cylindrical portions 72A and 72B are integrally provided on the bottom portion 54a of the reservoir tank 54, and these cylindrical portions 72A and 72B are fitted into the respective large diameter portions 67 of the cylindrical walls 65A and 65B in a state where the reservoir tank 54 is attached to the housing main body 57. The cylindrical portions 72A and 72B of the reservoir tank 54 have respective inner diameters matching the inner diameter of the small diameter portion 66 in a state of being fitted into the cylindrical walls 65A and 65B, respectively. When the cylindrical portions 72A and 72B are fitted into the respective large diameter portions 67 of the cylindrical walls 65A and 65B with the respective seal members 70 interposed therebetween, the valve bodies 10 of the electromagnetic valves 56A and 56B are brought into a slidable state. An assembly of the cylindrical walls 65A and 65B and the cylindrical portions 72A and 72B corresponds to an example of the hollow portion into which the valve bodies 10 of the electromagnetic valves 56A and 56B are slidably inserted.

As shown in Figs. 15 and 16, the electromagnetic valve 56A includes the four ports P1 to P4 which are open and closed by the valve body 10. The first port P1 is formed in the cylindrical wall 65A to be connected to the annular path 60 at the front side in the forward direction Rf in which one leftward round of the annular path in Figs. 15 and 16 is made. A part of the second port P2 is formed in the cylindrical wall 65A and the rest thereof is formed in the cylindrical portion 72A (see Fig. 17) such that the second port is connected to the annular path 60 at the rear side in the forward direction Rf. The first port P1 is positioned on a lower side which is one side in the sliding direction of the valve body 10, and the second port P2 is positioned on an upper side which is another side in the sliding direction. The third port P3 is formed in the cylindrical wall 65A to be connected to the input path 61A. A part of the fourth port P4 is formed in the cylindrical wall 65A and the rest thereof is formed in the cylindrical portion 72A such that the fourth port is connected to the input path 61A. The third port P3 is positioned on the lower side which is one side in the sliding direction of the valve body 10, and the fourth port P4 is positioned on the upper side which is another side in the sliding direction.

The electromagnetic valve 56B also includes four ports P1 to P4 having the same function, and the seal member 70 prevents the LLC from flowing in and out between the upper and lower ports. The first port P1 is formed in the cylindrical wall 65B to be connected to the annular path 60 at the front side in the forward direction Rf. A part of the second port P2 is formed in the cylindrical wall 65B and the rest thereof is formed in the cylindrical portion 72B such that the second port is connected to the annular path 60 at the rear side in the forward direction Rf. The first port P1 is positioned on the lower side, and the second port P2 is positioned on the upper side. The third port P3 is formed in the cylindrical wall 65B to be connected to the input path 61B. A part of the fourth port P4 is formed in the cylindrical wall 65B and the rest thereof is formed in the cylindrical portion 72B such that the fourth port is connected to the input path 61B. The third port P3 is positioned on the lower side, and the fourth port P4 is positioned on the upper side.

In the electromagnetic valves 56A and 56B, the seal member 70 is disposed between the first port P1 and the third port P3 positioned on the lower side and the second port P2 and the fourth port P4 positioned on the upper side. Therefore, the seal member 70 prevents the LLC from flowing in and out between the upper and lower ports via the clearance between the valve body 10 and the cylindrical wall 65A.

When the reservoir tank 54 is attached to the housing main body 57 in the state where the seal member 70 is provided on the stepped portion 68, the seal member 70 is fixed in a state of being sandwiched between the stepped portion 68 and each of the cylindrical portions 72A and 72B, and positional displacement of the seal member 70 in the sliding direction is suppressed. Consequently, the stepped portion 68 and the cylindrical portions 72A and 72B (cylindrical portions) function as an example of positional displacement suppressing means. The seal member 70 may be a gasket having a rectangular cross section or an O-ring having a circular cross section. As a material of the seal member 70, for example, a fluorine-based low-friction material may be used, or a surface thereof may be subjected to low-friction treatment such as fluorine coating. In this manner, the sliding resistance of the valve body 10 is reduced, and an output of the drive unit 12 can be reduced, so that the drive unit 12 can be downsized.

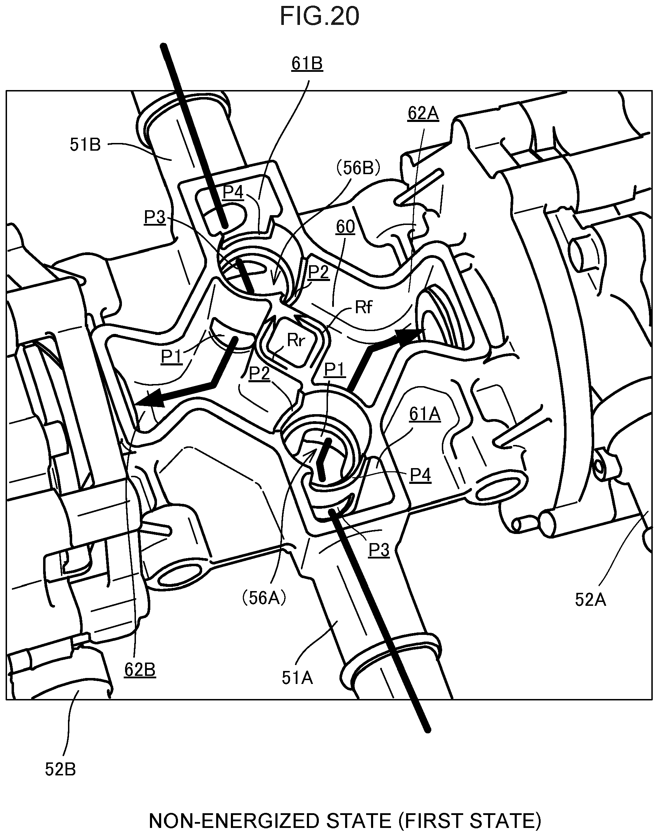

As shown in Figs. 18A and 18B, in the case of the non-energized state that is the first state, the first port P1 and the third port P3 of the electromagnetic valves 56A and 56B are open, and the second port P2 and the fourth port are closed. Hence, as shown in Fig 20, the flow in the forward direction Rf in the annular path 60 is allowed and the flow in the reverse direction Rr is blocked. The input portion 51A and the output portion 52A are conducted, and the input portion 51B and the output portion 52B are conducted. Hence, in the non-energized state, the LLC flowing into the input path 61A flows to the annular path 60 in the forward direction Rf and is guided to the output path 62A. The LLC flowing into the input path 61B flows through the annular path 60 in the forward direction Rf and is guided to the output path 62B.

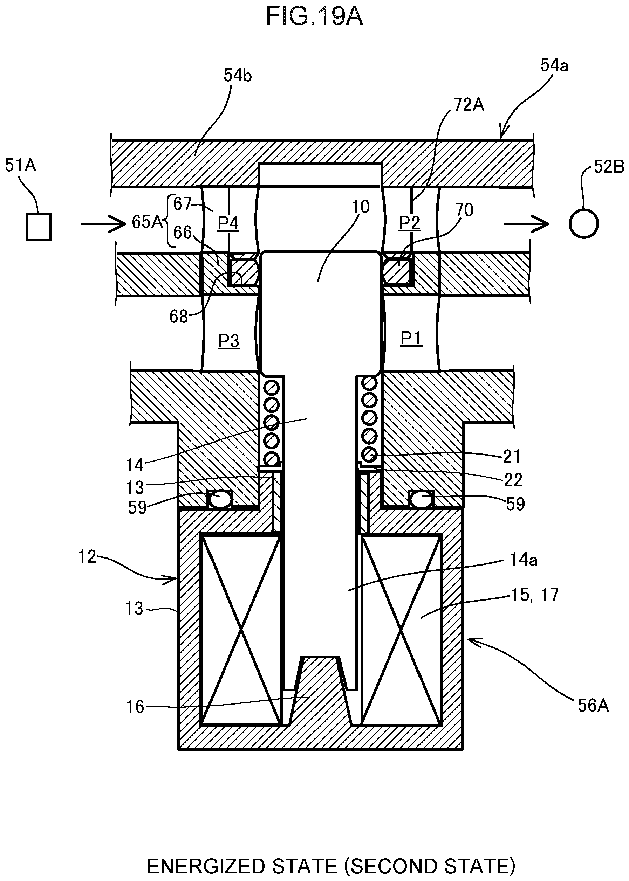

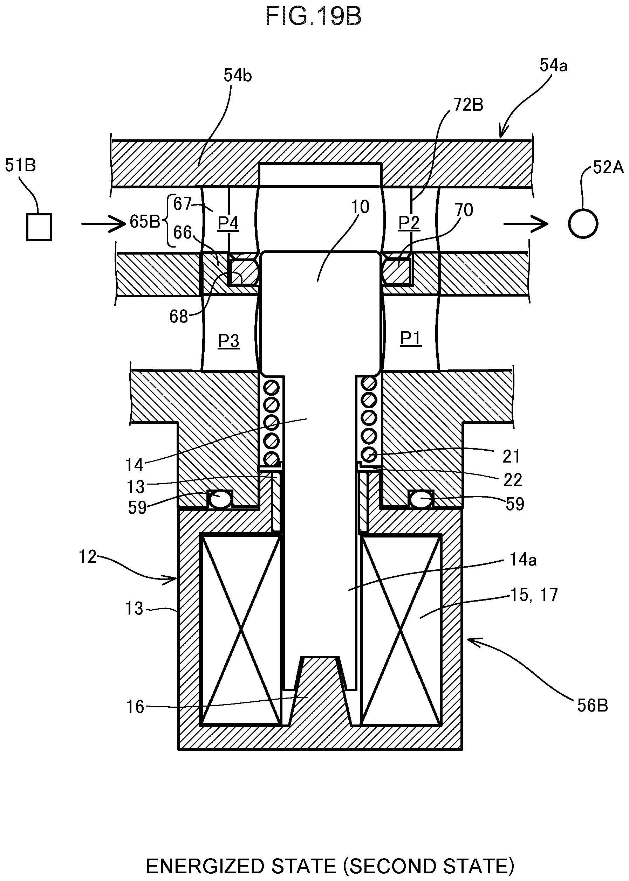

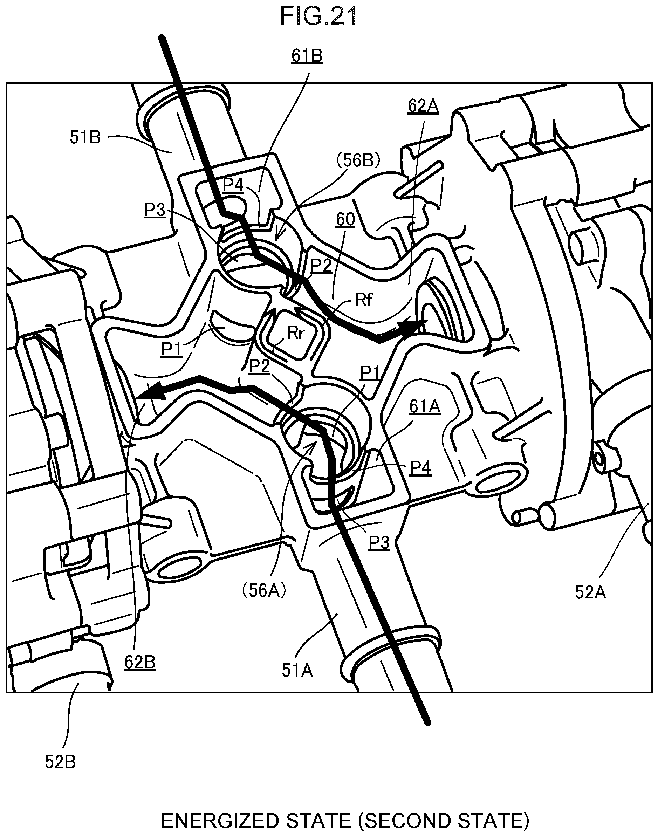

As shown in Figs. 19A and 19B, in the case of the non-energized state that is the second state, contrary to the above, the first port P1 and the third port P3 of the electromagnetic valves 56A and 56B are closed, and the second port P2 and the fourth port P4 are open. Hence, as shown in Fig 21, the flow in the forward direction Rf in the annular path 60 is blocked and the flow in the reverse direction Rr is allowed. The input portion 51A and the output portion 52B are conducted, and the input portion 51B and the output portion 52A are conducted. Hence, in the energized state, the LLC flowing into the input path 61A flows through the annular path 60 in the reverse direction Rr and is guided to the output path 62B. The LLC flowing into the input path 61B flows through the annular path 60 in the reverse direction Rr and is guided to the output path 62A.

Hence, by switching from the non-energized state to the energized state, it is possible to switch from the cooling system in which the input portion 51A and the output portion 52A are electrically connected and the input portion 51B and the output portion 52B are electrically connected to the cooling system in which the input portion 51A and the output portion 52B are electrically connected and the input portion 51B and the output portion 52A are electrically connected.

The flow-path switching devices of the above embodiments are not limited to the shown embodiment and can be implemented in various embodiments within the scope of the gist of the present disclosure. The flow-path switching device 1 is a device in which the two electromagnetic valves 56A and 56B are assembled, but the present disclosure can be implemented in an element in which three or more electromagnetic valves are assembled as long as a plurality of electromagnetic valves are provided. The present disclosure can also be implemented by substituting the input path 6A and the output path 7A of the flow-path switching device 1 for each other and performing changing to a state in which the input path 6B and the output path 7B are substituting for each other. The same applies to the flow-path switching device 51.

The flow-path switching device 1 includes the two electromagnetic valves 3A and 3B partially having different configurations, and the two electromagnetic valves 3A and 3B are caused to function by simultaneously switching between the energized state and the non-energized state, but this is merely an example. For example, the present disclosure can also be implemented by changing the configuration to a configuration in which two electromagnetic valves have completely the same configuration are provided, and an operation in which one is set to an energized state and the other is set to a non-energized state and an operation tin which one is set to the non-energized state and the other is set to the energized state are switched. The same applies to the flow-path switching device 51.

Regarding an application target to which the flow-path switching device of the above embodiment is applied, in a case in which there is a difference in the use frequency of the plurality of cooling systems to be switched, the non-energized state may correspond to the cooling system with the high use frequency, and the energized state may correspond to the cooling system with a low use frequency. Since an energization time to the electromagnetic valve can be reduced as compared with the case in which the correspondence relationship is reversed, the power consumption can be suppressed.

The seal member 70 according to the second embodiment can also be provided at a corresponding portion of the first embodiment. The positional displacement suppressing means of the seal member 70 is not limited to the configuration of the second embodiment, and for example, a groove portion may be formed at the inner circumferential surface of the hollow portion, and a seal member such as an O-ring may be fitted into the groove portion to function as the positional displacement suppressing means.

The following invention of the cooling unit can be ascertained based on the description of the embodiments and the description of the modification examples. That is, the present invention is the cooling unit including the flow-path switching device capable of switching between a plurality of cooling systems in which a fluid flows, a tank that stores the fluid and is connected to the flow path switching device, and a water pump connected to the flow path switching device. The flow path switching device includes the housing main body that has a first flow path communicating with the tank and a second flow path communicating with the water pump and is open in a direction in which the first flow path and the second flow path traverse, and the lid that closes an open side of the housing body. The tank is provided as the lid of the housing. According to this cooling unit, since the water pump and the tank, which are configurational elements of the cooling system, are provided in the flow-path switching device, there is no need to provide a pipe connecting the flow-path switching device and these configurational elements. Hence, since the transport efficiency of the fluid is enhanced and the output of the pump can be reduced, a low-output small pump can be adopted. Consequently, the cooling unit can be reduced in size and weight.

The entire disclosure of Japanese Patent Application No. 2021-201226 filed on November 18, 2021 is incorporated herein by reference. The entire disclosure of Japanese Patent Application No. 2022-162793 filed on September 20, 2022 is incorporated herein by reference.

All of the literatures, patent applications, and technical standards described in this specification are incorporated herein by reference to the same extent that individual literatures, patent applications, and technical standards were specifically and individually indicated to be incorporated by reference.

## Claims

1. A flow-path switching device, comprising:
a plurality of electromagnetic valves configured as three-way valves; and
a housing to which the plurality of electromagnetic valves are provided, wherein:
the housing includes:
an annular path connecting the plurality of electromagnetic valves together,
a plurality of first flow paths that are connected to the annular path via the plurality of electromagnetic valves, respectively, and that have one-to-one correspondence with the plurality of electromagnetic valves, respectively, and
a plurality of second flow paths that are connected to the annular path so as to each be sandwiched between two adjacent electromagnetic valves; and
each of the plurality of electromagnetic valves includes:
a hollow portion in which a first port connected to the annular path at a front side in a predetermined direction in which one circuit of the annular path is made and a second port connected to the annular path at a rear side in the predetermined direction are formed, the hollow portion being provided integrally with or separately from the housing, and
a valve body that is slidably inserted into the hollow portion so as to be switchable between a first state in which the first port is open and the second port is closed, so as to open the annular path and the first flow path, and a second state in which the first port is closed and the second port is open, so as to open the annular path and the first flow path.

2. The flow-path switching device according to claim 1, wherein the hollow portion is equipped with:
a third port that is connected to the first flow path, that is open in the first state, and that is closed by the valve body in the second state; and
a fourth port that is connected to the first flow path, that is closed by the valve body in the first state, and that is open in the second state.

3. The flow-path switching device according to claim 1 or 2, wherein:
the hollow portion includes a gap enlarging portion that enables a gap formed between the hollow portion and the valve body to partially enlarge in a circumferential direction of the valve body.

4. The flow-path switching device according to any one of claims 1 to 3, wherein:
the hollow portion is provided separately from the housing,
the housing includes an attachment portion on which the hollow portion is attached,
the attachment portion includes a plurality of projecting portions that project toward an outer circumferential surface of the hollow portion and are provided at intervals in a circumferential direction of the hollow portion, and
the hollow portion is press-fitted to and attached on the attachment portion such that the plurality of projecting portions are deformed.

5. The flow-path switching device according to claim 4, wherein:
the hollow portion includes a baffle portion that extends between two adjacent projecting portions among the plurality of projecting portions and that projects toward an inner circumferential surface of the attachment portion.

6. The flow-path switching device according to claim 4 or 5, wherein:
each of the plurality of electromagnetic valves includes a resin valve housing that accommodates a predetermined configurational element,
the housing is made of a resin material,
the housing includes an annular wall portion that surrounds a perimeter of the attachment portion, that projects toward one side in a moving direction of the valve body, and that is welded to the valve housing,
the hollow portion is press-fitted into the valve housing via a collar such that an end surface of the hollow portion is not at a same position in an axial direction as a welded portion between the valve housing and the annular wall portion, and
the collar is made of a material having higher heat resistance than the hollow portion.

7. An electromagnetic valve configured as a three-way valve, comprising:
a valve body;
a drive unit that drives the valve body;
a plunger that operates integrally with the valve body; and
a resin valve housing that accommodates the drive unit and the plunger, wherein:
the drive unit includes:
a hollow coil portion into which the plunger is inserted,
a fixed core assembled with the coil portion to face an end portion of the plunger, and
a plunger guide that guides the plunger,
the valve housing is formed by overmolding with a resin material to surround the drive unit, and
the plunger guide is formed by overmolding with a resin material to surround the coil portion.

8. The electromagnetic valve according to claim 7, further comprising:
a communication path that is formed between the end portion of the plunger and the fixed core and that enables communication between a first space positioned at a drive unit side and a second space positioned at a valve body side.

9. The electromagnetic valve according to claim 8, wherein:
the communication path is formed at an inner circumferential surface of the plunger guide and includes a slit extending in an axial direction of the plunger guide and retracted in a radial direction.

10. The electromagnetic valve according to claim 8, wherein:
the communication path includes a processed portion removed so that a part of the plunger becomes a flat surface.

11. The electromagnetic valve according to claim 8, wherein:
the communication path is formed inside the plunger and includes an internal passage open to both the first space and the second space.

12. The electromagnetic valve according to claim 8, wherein:
the communication path includes a spiral groove formed at an outer circumferential surface of the plunger so as to extend spirally in an axial direction of the plunger.

13. The flow-path switching device according to claim 2, wherein:
the first port and the third port are disposed at one side in a sliding direction of the valve body, and the second port and the fourth port are disposed at another side in the sliding direction, and
the flow-path switching device further comprises a seal member that is disposed at an inner circumferential surface of the hollow portion so as to be positioned between both the first port and the third port and both the second port and the fourth port.

14. The flow-path switching device according to claim 13, further comprising:
a positional displacement suppressing means that is disposed adjacent to the seal member and that suppresses positional displacement of the seal member in the sliding direction.

15. The flow-path switching device according to claim 14, wherein:
the hollow portion includes a small diameter portion having a small inner diameter, a large diameter portion having a large inner diameter, a stepped portion positioned between both the first port and the third port and both the second port and the fourth port and positioned at a boundary between the small diameter portion and the large diameter portion, and a cylindrical portion fitted to the large diameter portion and having an inner diameter adapted to the small diameter portion, and
the seal member is disposed between the stepped portion and the cylindrical portion, such that the stepped portion and the cylindrical portion function as the positional displacement suppressing means.

16. The flow-path switching device according to claim 15, wherein:
the housing includes a housing main body and a lid that closes one side of the housing main body in the sliding direction, and
the cylindrical portion is provided at the lid.

17. A cooling unit comprising:
the flow path switching device according to claim 16;
a pump connected to the housing so as to communicate with the second flow path of the flow path switching device; and
a tank provided in the flow path switching device to communicate with the first flow path,
wherein the tank is provided as the lid of the housing.
